# EUROPÄISCHE PATENTSCHRIFT

(11) **EP 1 300 451 B1**
(45) Veröffentlichungstag und Bekanntmachung des Hinweises auf die Patenterteilung: **23.05.2007**
(21) Anmeldenummer: 02021412.8
(22) Anmeldetag: 25.09.2002
(51) Int. Cl.: C09D 175/04

(54) **Verwendung eines Beschichtungsmittels und Beschichtung zur Erzeugung von Oberflächen mit besonderem Effekt**
Use of a coating composition and coating for producing surfaces with special effects
Utilisation d'une composition de revêtement et revêtement pour produire des surfaces à effets spéciaux

(30) Priorität: 04.10.2001 DE 10149151
(43) Veröffentlichungstag der Anmeldung: 09.04.2003
(73) Patentinhaber: J.S. Staedtler GmbH & Co KG, 90427 Nürnberg (DE)
(72) Erfinder: Häfner, Susi, 90408 Nürnberg (DE); Hummel, Heidi, Dr., 92224 Amberg (DE)

(56) Entgegenhaltungen:
- EP-A- 0 278 278
- WO-A1-99/40139
- US-A- 4 206 255
- US-A- 5 512 322
- US-A- 5 735 622
- DATABASE WPI Week 199837 Derwent Publications Ltd., London, GB; AN 1998-434171 XP002260838 & JP 10 183059 A (PENTEL) 7. Juli 1998 (1998-07-07)

## Beschreibung

Die Erfindung betrifft die Verwendung eines Beschichtungsmittels und Beschichtungen, zur Erzeugung von Oberflächen mit besonderem Effekt.

Beschichtungsmittel und Beschichtungen für Oberflächen sind prinzipiell bekannt, z.B. auch als Lackierungen für beliebige Gegenstände. Bekannte Beschichtungen, bzw. Lackierungen, z.B. auch für holzgefasste Stifte zum Schreiben, Zeichnen oder Malen oder für Kosmetikartikel aller Art, bestehen überwiegend aus gefärbtem oder farblosem Nitrocellulose-Lack oder aus Kunststoffen, z.B. aus Polyamidharz. Zur schnellen Trocknung werden Lösemittel wie Aceton oder Acetate eingesetzt. Diese Beschichtungsmittel weisen ggf. noch dispergierte Pigmente und Füllstoffe auf. Zur Erzeugung einer ausreichenden Deckkraft mit derartigen Beschichtungen sind, je nach Oberflächenqualität, bis zu 8 Lackierungsdurchgänge erforderlich. Abschließend wird meist noch eine klare Glanz- oder Mattschicht aufgebracht. Alternativ zu derartigen lösungsmittelhaltigen Oberflächenüberzügen werden auch andere Beschichtungen eingesetzt. Hierbei handelt es sich meistens um wässrige Acrylat- oder Polyurethan - Dispersionen. Wie den Lösemittellacken werden auch den wässrigen Dispersionen in der Regel Pigmente und Füllstoffe zugesetzt. Da die Deckkraft auch dieser Dispersionen meist relativ gering ist, werden ebenfalls mehrere Lackiergänge erforderlich. Auch die Füllwirkung, d.h. die Abdeckung von Oberflächenfehlern, bzw. die Füllung von Poren, ist hierbei nur mäßig, was ggf. auch zu unbefriedigender Oberflächenqualität führt. Oft wird durch derartige Überzüge die Wertigkeit solcher Produkte geringer. Bei der Verwendung bekannter Beschichtungen kann es, besonders bei porigen Hölzern, nach der Trocknung zu ungleichmäßiger Oberflächenstruktur kommen. Dies ist dadurch begründet, dass die Oberfläche zwar zunächst gleichmäßig überzogen wird, die Beschichtung aber bei der Trocknung Lösemittel abgibt und dadurch schrumpft und sich der porigen Oberfläche anpasst. Hierbei entsteht ggf. der optische Eindruck einer Art "Pockennarbigkeit", der gegenüber unbeschichtetem Holz sogar noch verstärkt wird. Ein besonderer Nachteil bei der Verwendung bekannter Beschichtungsmittel ist auch darin zu sehen, dass die mit ihnen erzeugten Oberflächen hart und glatt sind und beim Gebrauch, vor allem bei längerem Halten in der Hand, zu Ermüdungen und Verkrampfungen der haltenden Finger führen, sowie zu Schweißbildungen im Haltebereich.
In **DE 299 08 890 U1** wird zur Verbesserung der haptischen Empfindungen und Bedingungen bei der Benutzung holzgefasster Stifte neben der Ausbildung besonderer Griffzonen und der Verwendung zusätzlicher Griffelemente auch z.B. schon vorgeschlagen, diese Stifte in ergonomischer Hinsicht derart zu verbessern, dass die zur Handhabung dienende Oberfläche mit Griffflächen oder Griffnoppen bildenden erhabenen Strukturen aus Kunststoffmaterial versehen sein sollen. Nachteilig hierbei ist es aber unter anderem, dass das Aufbringen der Noppen nachträglich und zusätzlich zur Lackierung oder als "Sonderlackierung" erfolgen muss und somit das Produkt verteuert.

Weiter ist aus der **EP 0 278 278 A1** Beschichtungs- und Zurichtmittel für Leder bekannt, welches auf Basis wässriger Polyurethandispersionen aufgebaut ist. Die eingesetzten Polyurethandispersionen bestehen hierbei aus Polyesterpolyolen, olechemischen Polyolen, gegebenenfalls Polyetherpolyolen und anionischen Gruppen tragenden Dihydroxy- und/oder Diaminoverbindungen sowie organischen Diisocyanaten.

**Aufgabe** der vorliegenden Erfindung ist es daher, ein Beschichtungsmittel und Beschichtung zur Verwendung für Schreib-, Zeichen- oder Malgeräte oder für Kosmetikartikel aller Art zu schaffen, womit diese Nachteile vermieden werden und womit bei guter Haftfähigkeit, hoher Deckkraft und guter Qualität, Beschichtungen und Oberflächen mit einem besonderen Effekt erzielt werden, die ein haptisch angenehmes Gefühl und gute Griffigkeit sowie eine hautsympathische und "rutschfeste" Handhabung vermitteln. Zudem sollen die mit den vorschlagsgemäßen Beschichtungen versehenen Produkte grundsätzlich rutschhemmend wirken und technisch einfach und wirtschaftlich herstellbar sein.

Diese Aufgabe wird mit der im Anspruch 1 beschriebenen Verwendung gelöst.
Vorteilhafte Ausführungen, Weiterbildungen und Anwendungen sind in den weiteren Ansprüchen umfasst.

Für die Verwendung derartiger Beschichtungsmittel als vorteilhafte Beschichtungen werden bevorzugte Anwendungsbereiche empfohlen. Als vorrangiges Anwendungsgebiet wird die Oberflächen-Beschichtung von Schreib-, Zeichen- oder Malgeräten oder von sonstigen Gegenständen vorgeschlagen, die vor allem häufig in die Hand genommen werden oder die sonst mit Körperteilen in Berührung kommen.
Anhand einiger Beispiele wird die Erfindung nachfolgend näher dargestellt. Hierbei sind die genannten Mengenangaben prozentuale Einzelwerte, die im Rahmen der Verarbeitbarkeit und der gewünschten Endeigenschaften, sowie der gegenseitigen Verträglichkeiten, teilweise erheblich variieren können.

Es hat sich überraschenderweise gezeigt, dass durch die Verwendung von wässrigen Polyurethan (PU) - Dispersionen (a) und von Polyether - Polyurethan - Copolymerisat - Dispersionen (b) als primäre Komponenten des Beschichtungsmittels, nicht nur das Haftungs- und Deckungsvermögen auf Oberflächen von Gegenständen verbessert wird, sondern dass auch ein besonders hautsympathischer und haptisch angenehmer und vorteilhafter Überzug mit insgesamt rutschfester Oberfläche sowie guter "Griffigkeit" entsteht und somit ein sehr angenehmer "ergosoft-grip-effekt".

Die vorschlagsgemäß eingesetzten **Bindemittel** (BM), die Polyurethan (PU)-Dispersionen (a), bzw. die Polyether-Polyurethan-Dispersions-Copolymerisate (b) enthalten zum Beispiel vorzugsweise:
30 bis 45 Gewichts-% Polyurethan (a1) bzw.
30 bis 40 Gewichts-% Polyether-Polyurethan- Copolymerisat (b1),
0,1 bis 5 Gewichts-% N-Methyl-Pyrrolidon (a2, b2) und/oder weitere Zusätze (ax, bx) in 55 bis 70 Gewichts-% Wasser (a3, b3), als Dispergiermittel.
Derartige **Dispersionen** (a) und (b) sind als Handelsprodukte erhältlich.
Zu beachten ist hierbei allerdings, dass diese Bindemittel möglichst keine freien Isocyanatgruppen aufweisen, zur Vermeidung unnötiger gesundheitlicher Beeinträchtigungen, bei der Verwendung des Mittels und am fertigen Produkt.

Als **Netzmittel** (c), das für wässrige Beschichtungen i.d.R. erforderlich ist, sind: Silicone, bzw. ein Polyether-Siloxan, besonders geeignet. Alternativ oder in Verbindung hiermit sind aber auch andere Netzmittel möglich.
Als **Entschäumer** (d), ist unter anderem auch Polysiloxan gut geeignet.

**Füllstoffe** (e) können unter anderem (e1) Talkum, (e2) Bariumsulfat und/oder (e3) Titandioxid sein, wobei Titandioxid (e3) gleichzeitig auch als Farbpigment (f9) eingesetzt werden kann.

Bei den **Farbmitteln** (f) werden bevorzugt handelsübliche Pigmentteige (f1, f2, f3, f4, f7, f8) oder auch Pigmente (f6, f9) direkt verwendet oder auch wasserlösliche Farbstoffe (fx).
Geeignete **Gleitmittel** (g) sind bevorzugt (g1) Teflonwachse, (g2) Polyethylen (PE) - Wachse oder (g3) Polypropylen (PP)-Wachse.
Bei einer Verringerung des Wachsanteils wird der erzielbare "ergosoft"-Effekt verstärkt, während sich demgegenüber bei einer Erhöhung des Wachsanteils die Verarbeitbarkeit des Beschichtungsmittels verbessert.
Als **Verdicker** (h) können (h1) PU- oder (h2) Acrylat-Verdicker eingesetzt werden. Zudem können ggf. noch **sonstige Zusatzstoffe** (kx) wie z.B. Konservierungsmittel u.s.w. eingesetzt werden.

Zur Einstellung der gewünschten Konsistenz und zur guten Verarbeitbarkeit des Beschichtungsmittels bei gutem Effekt der beschichteten Oberfläche, dient neben der Wachsmenge, bzw. dem Gleitmittel (g) und dem Verdicker (h), auch der Anteil des jeweiligen Bindemittels (a) bzw. (b) und dessen jeweiliger Wasseranteil (a3, b3). Grundsätzlich sind optimale Verarbeitbarkeit und optimales Ergebnis anzustreben.

**Rahmenbeispiel 1: Beschichtungsmittel, allgemein:**

| | |
|---|---|
| a) Polyurethan-Dispersion | 0,1 bis 30 Gew.-% |
| b) Polyether- Polyurethan - Copolymerisat - Dispersion | 30 bis 50 Gew.-% |
| c) Netzmittel / Silicon / Polyether-Siloxan | 0,05 bis 0,5 Gew.-% |
| d) Entschäumer, e) Füllstoffe, f) Farbmittel, g) Gleitmittel, h) Verdicker und/oder k) sonstige Zusatzstoffe | 0,05 bis 50 Gew.-% |

**Rahmenbeispiel 2: farbige Beschichtungsmittel:**

| | |
|---|---|
| a) Polyurethan-Dispersion | 0,1 bis 12 Gew.-% |
| b) Polyether- Polyurethan - Copolymerisat - Dispersion | 35 bis 50 Gew.-% |
| c) Netzmittel / Silicon / Polyether- Siloxan | 0,05 bis 0,3 Gew.-% |
| d) Entschäumer/ Polysiloxan | 0,1 bis 0,5 Gew.-% |
| e) Füllstoffe | 5 bis 45 Gew.-% |
| f) Farbmittel | 0,05 bis 25 Gew.-% |
| g) Gleitmittel | 0,5 bis 5 Gew.-% |
| h) Verdicker und/oder k) sonstige Zusätze | 0,01 bis 5 Gew.-% |

**Rahmenbeispiel 3: farblose Beschichtungsmittel:**

| | |
|---|---|
| a) Polyurethan-Dispersion | 40 bis 50 Gew.-% |
| b) Polyether- Polyurethan - Copolymerisat - Dispersion | 40 bis 50 Gew.-% |
| c) Netzmittel / Silicon / Polyether - Siloxan | 0,01 bis 0,5 Gew.-% |
| g) Gleitmittel / PE-, PP-Wachs | 2 bis 20 Gew.-% |
| h) Verdicker, | 0,1 bis 2 Gew.-% |
| d) Entschäumer und/oder k) sonstige Zusätze | 0,01 bis 5 Gew.-% |

Einige Ausführungsbeispiele werden nachfolgend in tabellarischer Form wiedergegeben. "B" steht hierbei für "Beschichtung", bzw. für Beschichtungsmittel.

Bevorzugte Anwendungen der Erfindung sind Beschichtungen, bzw. Oberflächen-Überzüge von Schreib-, Zeichen-, Mal- oder Kosmetikgeräten aller Art, die dadurch eine hautsympathische, haptisch angenehme, weiche und samtartig erscheinende Oberfläche aufweisen.
Die Beschichtungen bzw. die Oberflächen -Überzüge dieser Schreib-, Zeichen-, Mal- oder Kosmetikgeräte bestehen dann somit aus Polyurethan (a1), Polyether - Polyurethan - Copolymerisat (b1) und Netzmittel (c), sowie ggf. aus Entschäumer (d), Füllstoffe (e), Farbmittel (f), Gleitmittel (g), Verdickungsmittel (h) und/oder sonstigen Zusatzstoffen (k).
Speziell können die Beschichtungen dieser Schreib-, Zeichen-, Mal- oder Kosmetikgeräte auch Silicon, insbesondere Polyether-Siloxan (c), Polysiloxan (d), Talkum (e1), Bariumsulfat (e2), Titandioxyd (e3) / (f9), Teflonwachs (g1), Polyethylenwachs (g2) und/oder Polypropylenwachs (g3) aufweisen.

| *Ifd. Nr.* | *Bezeichnung:* | *primäre Funktion:* | *Beispiele: von* /*bis: %* | | *Beispiel 1: grünes B.:* | *Beispiel 2. gelbes B.:* | *Beispiel 3: rotes B.:* | *Beispiel 4: blaues B.:* | *Beispiel 5., weißes B.:* | *Beispiel* 6: *klares B.* |
|---|---|---|---|---|---|---|---|---|---|---|
| 01 | (a) Polyurethan-Dispersion | Bindemittel | 0,1 | 45 | 9,5 % | 9,3 % | 9,5 % | 1.6% | | 43,6 % |
| 02 | (b) Polyether-Polyurethan-Copolymerisat-Dispersion | Bindemittel | 40 | 50 | 40,8 % | 40,1 % | 44.6% | 42,3 % | 49,5 % | 46,4 % |
| 03 | (c) Polyether-Siloxan | Netzmittel | 0,1 | 0,5 | 0,1 % | 0,1 % | 0,1 % | 0,1 % | 0,4 % | 0,2 % |
| 04 | (d) Polysiloxan | Entschäumer | 0 (0,2) | 0,5 | 0,4 % | 0,2 % | 0,2 % | 0,3 % | 0,5 % | |
| 05 | (e1) Talkum | Füllstoff | 0 (10) | 24 | 23,2 % | 15,7 % | 10,0 % | 15,5 % | 17,8 % | |
| 06 | (e2) Bariumsulfat | Füllstoff | 0 (10) | 20 | 13,4 % | 19,1 % | 14,0 % | 11,9% | 10,2 % | |
| 07 | (e3) (f9) Titandioxid | Füllstoff/Farbm. | 0(0-17) | 15 | 3,8 % | | 14,4 % | 4,3 % | 17,0 % | |
| 08 | (f1) Unisperse gelb | Farbmittel | 0 (0-4) | 5 | 4,1 % | | | | | |
| 09 | (f2) Colanyl grün | Farbmittel | 0 (0) | 3 | 2,8 % | | | | | |
| 10 | (f3) Flexonyl blau | Farbmittel | 0 (0) | 0,4 | 0,4 % | | | | | |
| 11 | (f4) Unisperse gelb B | Farbmittel | 0 (0) | 15 | | 14,0 % | | | | |
| 12 | (f5) Colanyl carmin | Farbmittel | 0 (0) | 5 | | | 3,8 % | | | |
| 13 | (f6) Ultramarin blau | Farbmittel | 0 (0) | 22 | | | | 20,1 % | | |
| 14 | (f7) Lignaflex violett | Farbmittel | 0 (0) | 1 | | | | 0,7 % | | |
| 15 | (f8) Colanyl schwarz | Farbmittel | 0 (0) | 0,2 | | | | 0,1 % | | |
| 16 | (g1) Teflonwachs | Gleitmittel | 0 (1) | 4 | 1,5 % | 1,5 % | 3,4% | 3,1% | 1.0% | |
| 17 | (g2) Polyethylen(PE)-od.(g3)Polypropylen(PP)Wachs | Gleitmittel | 0 (0) | 10 | | | | | 3,2 % | 9,0% |
| 18 | (h1) Polyurethan- oder (h2) Polyacrylat-Verdicker | Verdickungsmittel | 0 (0) | 1 | | | | | | 0,8 % |
| 19 | (kx) sonstige Zusätze | | 0 | 0,5 | | | | | 0,4 % | |
| 20 | Summe = | % | | | 100 | 100 | 100 | 100 | 100 | 100 |

Das farbige und das farblose Beschichtungsmittel werden i.d.R. nach herkömmlicher Beschichtungstechnik auf die zu beschichtenden Gegenstände ein- oder mehrschichtig aufgebracht und getrocknet.
Üblicherweise werden die Gegenstände vollständig überzogen. Sofern Muster oder z.B. Streifen-Dekors gewünscht werden, können diese mit gleichem wässrigen Beschichtungsmittel anderer Farben oder auch z.B. mit schwarzem oder farbigem Nitrocellulose-Streifenlack (NC-Lack) aufgebracht werden. Insbesondere auch bei der Verwendung von NC-Lack für die Musterung, sollten dem farblosen Beschichtungsmittel ggf. auch Haftvermittler, wie z.B. Silane zugesetzt werden, zur Verbesserung der Haftung des klaren Beschichtungsmittels auf den NC-Lack-Mustern. Die Griffigkeit des Gegenstandes insgesamt, wird hierdurch nicht reduziert.

Besonders für Gegenstände, die länger in der Hand gehalten werden oder die mit der Haut in Berührung kommen, oder die anderweitig rutschhemmend ausgebildet sein sollen, sind derartige Beschichtungsmittel vorzugsweise verwendbar, wie besonders auch für Schreib-, Zeichen-, Mal- oder Kosmetikstifte oder -Geräte oder für andere Artikel, die häufig mit Körperteilen direkt in Berührung kommen.

Aufgrund der besonderen Struktur und Haptik der mit dem vorgeschlagenen Beschichtungsmittel erzielten Beschichtungen, bzw. Oberflächen, der hiermit ganz oder teilweise überzogenen bzw. behandelten Gegenstände, entsteht als besonderer Effekt eine hautfreundliche, auch als "ergosoft" oder als "Ergo-Grip" bezeichenbare, angenehme Griffigkeit.

Insgesamt wird ein Beschichtungsmittel zur Erzeugung von Beschichtungen für Oberflächen mit besonderem Effekt vorgeschlagen, vor allem für Gegenstände, die häufig in die Hand genommen werden und / oder die anderweitig mit der Haut in Berührung kommen, wobei das Beschichtungsmittel im wesentlichen aus einer wässrigen Polyurethan - Dispersion (a) und einer wässrigen Polyether - Polyurethan - Copolymerisat - Dispersion (b) besteht und Netzmittel (c) sowie ggf. Entschäumer (d), Füllstoffe (e), Farbmittel, (f), Gleitmittel (g), Verdickungsmittel (h) und/oder sonstige Zusatzstoffe (k) enthält.

Das Wasser der Dispersionen (a) bzw. (b) stellt hierbei das primäre Dispergiermittel des gesamten Beschichtungsmittels dar.
Bevorzugte Beschichtungsmittel bestehen hierbei im wesentlichen aus Mischungen, die sich zusammensetzen aus 0,5 bis 50 Gew.-% wässrige Polyurethan - Dispersion (a) und 30 bis 50 Gew.-% wässrige Polyether-Polyurethan-Copolymerisat-Dispersion (b) und die zudem 0,05 bis 40 Gew.-% Netzmittel (c), Entschäumer (d), Füllstoffe (e), Farbmittel (f), Gleitmittel (g), Verdickungsmittel (h), und/oder sonstige Zusätze (k) enthalten.
Farbige Beschichtungsmittel können hierbei bevorzugt aus 1 bis 12 Gew.-% wässriger Polyurethan-Dispersion (a) und 35 bis 50 Gew.-% Polyether - Polyurethan - Copolymerisat - Dispersion (b) zusammengesetzt sein und zudem 0,05 bis 0,25 Gew.-% Silicon, bzw. Polyether-Syloxan (c), 4 bis 45 Gew.-% Füllstoffen (e), 0,3 bis 25 Gew.-% Farbmittel (f), sowie 0,5 bis 3 Gew.-% sonstige Zusätze enthalten, während sich farblose, bzw. klare Beschichtungsmittel insbesondere aus 40 bis 50 Gew.-% Polyurethan -Dispersion (a) und 40 bis 50 Gew.-% Polyether- Polyurethan - Copolymerisat - Dispersion (b) zusammen setzen sollen und zudem 0,1 bis 0,2 Gew.-% Silicon, bzw. Polyether-Siloxan (c), 5 bis 15 Gew.-% Wachs, insbes. PE-und/oder PP-Wachs (g), sowie 0,5 bis 2 Gew.-% Verdicker (h) und/oder sonstigen Zusätzen (k) enthalten können.

Die vorgeschlagenen Beschichtungsmittel bestehen bevorzugt aus Polyurethan - Dispersionen (a) mit 30-45 Gew.-% Polyurethan (a1) und aus Polyether - Polyurethan - Dispersion (b) mit 30 bis 40 Gew.-% Polyether - Polyurethan - Copolymerisat (b1) sowie 0,05 bis 5 Gew.-% N-Methyl-Pyrrolidon (a2, b2) und/oder weitere Zusätze (ax, bx) in 55 bis 70 Gew.-% Wasser (a3, b3) als Dispergiermittel.

Die hieraus hergestellten Beschichtungsmittel weisen bevorzugt 0,10 bis 25 Gew.-% Polyurethan (a1) und 5 bis 20 Gew.-% Polyether - Polyurethan - Copolymerisat (b1), 0,01 bis 5 Gew.-% N-Methyl-Pyrrolidon (a2, b2), 0,05 bis 40 Gew.-% Netzmittel (c), Entschäumer (d), Füllstoffe (e), Farbmittel (f) Gleitmittel (g), Verdickungsmittel (h) und/oder sonstige Zusätze (kx) in 30 bis 70 Gew.-% Wasser (a3, b3) auf.

Silicon, Polyether-Siloxan (c) und/oder Polysiloxan (d) haben sich als Netzmittel, bzw. als Haftvermittler und/oder als Entschäumer besonders vorteilhaft erwiesen. Ebenso wie ggf. Talkum (e1), Bariumsulfat (e2), und/oder Titandioxyd (e3) / (f9) als Füllstoffe (e) und/oder Farbmittel (f) Teflonwachs (g1), Polyethylenwachs (g2) und/oder Polypropylenwachs (g3) als Gleitmittel.

Beschichtung aus einem oben dargestellten Beschichtungsmittel fühlen sich weich an und sind besonders hautsympathische, haptisch angenehme und samtartige Oberflächen-Überzüge. Sie weisen insbesondere Polyurethan (a1), Polyether-Polyurethan - Copolymerisat (b1) und Netzmittel (c) sowie ggf. Entschäumer (d), Füllstoffe (e), Farbmittel (f), Gleitmittel (g), Verdickungsmittel (h) und/oder sonstige Zusatzstoffe (k) auf.
Vorzugsweise setzen sich derartige Beschichtung zusammen aus:
0,10 bis 25 Gew.-% Polyurethan (a1),
5 bis 20 Gew.-% Polyether- Polyurethan - Copolymerisat (b1),
0,01 bis 5 Gew.-% N-Methyl-Pyrrolidon (a2, b2),
0,05 bis 40 Gew.-% Netzmittel (c), Entschäumer (d), Füllstoffe (e),
sowie ggf. Farbmittel (f), Gleitmittel (g), Verdickungsmittel (h) und/oder
sonstigen Zusätzen (kx), insbesondere Silicon, Polyether-Siloxan (c), sowie ggf. Polysiloxan (d), Talkum (e1), Bariumsulfat (e2), Titandioxyd (e3) / (f9) Teflonwachs (g1), Polyethylenwachs (g2) und/oder Polypropylenwachs (g3).

Die Verwendung des vorgeschlagenen Beschichtungsmittels für Beschichtungen bzw. als Oberflächen-Lackierung für feste Produkte, die direkt mit der Haut in Berührung kommen oder die rutschhemmend abzulegen oder aufzubewahren sind bietet sich besonders an.
Vorzugsweise vor allem auch dessen Verwendung als Beschichtung, bzw. als Oberflächen-Lackierung für stabförmige Produkte aus Holz, Metall oder Kunststoff, insbesondere für Schreib-, Zeichen- oder Malgeräte oder für Kosmetikartikel aller Art, da diese Gegenstände häufig und oft sehr lange Zeit in der Hand gehalten werden und auch sonst auf Auflageflächen oder Ablagen rutschfest liegen bleiben sollen.

## Patentansprüche

1. Verwendung eines Beschichtungsmittels zur Oberflächenlackierung und Beschichtung für Schreib-, Zeichen- oder Malgeräte oder für Kosmetikartikel aller Art, zur Erzeugung von Oberflächen mit besonderem Effekt,
wobei das Beschichtungsmittel im wesentlichen aus einer wässrigen Polyurethan - Dispersion (a) und einer wässrigen Polyether - Polyurethan - Copolymerisat - Dispersion (b) besteht und Netzmittel (c) sowie ggf. Entschäumer (d), Füllstoffe (e), Farbmittel (f), Gleitmittel (g), Verdickungsmittel (h) und/oder sonstige Zusatzstoffe (k) enthält, wobei das Wasser der Dispersionen (a) bzw. (b) das primäre Dispergiermittel des gesamten Beschichtungsmittels ist.

2. Verwendung eines Beschichtungsmittels nach Anspruch 1,
wobei es im wesentlichen aus
0,5 bis 50 Gew.-% wässrige Polyurethan - Dispersion (a) und
30 bis 50 Gew.-% wässrige Polyether-Polyurethan-Copolymerisat-Dispersion (b) besteht und 0,05 bis 40 Gew.-% Netzmittel (c), Entschäumer (d), Füllstoffe (e), Farbmittel (f), Gleitmittel (g), Verdickungsmittel (h), und/oder sonstige Zusätze (k) enthält.

3. Verwendung eines Beschichtungsmittels nach Anspruch 1 oder 2,
wobei es als farbiges Beschichtungsmittel ausgebildet ist und aus
1 bis 12 Gew.-% wässriger Polyurethan-Dispersion (a) und
35 bis 50 Gew.-% Polyether - Polyurethan - Copolymerisat - Dispersion (b) besteht und
0,05 bis 0,25 Gew.-% Silicon oder Polyether-Siyloxan (c),
4 bis 45 Gew.-% Füllstoffes (e),
0,3 bis 25 Gew.-% Farbmittel (f), sowie
0,5 bis 3 Gew.-% sonstigen Zusätzes enthält.

4. Verwendung eines Beschichtungsmittels nach einem der Ansprüche 1 oder 2,
wobei es als farbloses oder als klares Beschichtungsmittel ausgebildet ist und aus
40 bis 50 Gew.-% Polyurethan -Dispersion (a) und
40 bis 50 Gew.-% Polyether- Polyurethan - Copolymerisat - Dispersion (b) besteht und
0,1 bis 0,2 Gew.-% Silicon oder Polyether-Siloxan (c),
5 bis 15 Gew.-% Wachs, sowie
0,5 bis 2 Gew.-% Verdicker (h) und/oder sonstigen Zusätzes (k) enthält. 1

5. Verwendung eines Beschichtungsmittels nach einem der vorhergehenden Ansprüche, wobei die Polyurethan - Dispersion (a) 30-45 Gew.-% Polyurethan (a1) und die - Polyether - Polyurethan - Dispersion (b) 30 bis 40 Gew.-% Polyether - Polyurethan - Copolymerisat (b1) sowie 0,05 bis 5 Gew.-% N-Methyl-Pyrrolidon (a2, b2) und/oder weitere Zusätze (ax, bx) in 55 bis 70 Gew.-% Wasser (a3, b3) als Dispergiermittel, aufweisen.

6. Verwendung eines Beschichtungsmittels nach einem der vorhergehenden Ansprüche,
wobei es 0,10 bis 25 Gew.-% Polyurethan (a1) und
5 bis 20 Gew.-% Polyether - Polyurethan - Copolymerisat (b1),
0,01 bis 5 Gew.-% N-Methyl-Pyrrolidon (a2, b2),
0,05 bis 40 Gew.-% Netzmittel (c), Entschäumer (d), Füllstoffe (e), Farbmittel (f) Gleitmittel (g), Verdickungsmittel (h) und/oder sonstige Zusätze (kx)
in 30 bis 70 Gew.-% Wasser (a3, b3), enthält.

7. Verwendung eines Beschichtungsmittels nach einem der vorhergehenden Ansprüche, wobei es Silicon als Netzmittel, oder als Haftvermittler und/oder als Entschäumer enthält.

8. Verwendung eines Beschichtungsmittels nach einem der vorhergehenden Ansprüche, wobei es Talkum (e1), Bariumsulfat (e2), und/oder Titandioxyd (e3) /(f9) als Füllstoffe (e) und/oder Farbmittel (f) aufweist.

9. Verwendung eines Beschichtungsmittels nach einem der vorhergehenden Ansprüche, wobei es Teflonwachs (g1), Polyethylenwachs (g2) und/oder Polypropylenwachs (g3) als Gleitmittel aufweist.

## Claims

1. Use of a coating means for surface lacquering and coating of writing, drawing or painting apparatus or for cosmetic articles of all kinds, for producing surfaces with special effect, wherein the coating means substantially consists of an aqueous polyurethane dispersion (a) and an aqueous polyether-polyurethane-copolymerisate dispersion (b) and contains wetting agent (c) as well as optionally antifoaming agent (d), fillers (e), colorant (f), lubricant (g), thickener (h) and/or other additives (k), wherein the water of the dispersions (a) and (b) is the primary dispersant of the entire coating means.

2. Use of a coating means according to claim 1, wherein it consists substantially of 0.5 to 50 weight % of aqueous polyurethane dispersion (a) and 30 to 50 weight % of aqueous polyether-polyurethane-copolymerisate dispersion (b) and contains 0.05 to 40 weight % of wetting agent (c), antifoaming agent (d), fillers (e), colorant (f), lubricant (g), thickener (h) and/or other additives (k).

3. Use of a coating means according to claim 1 or 2, where it is formed as a coloured coating means and consists of 1 to 12 weight % of aqueous polyurethane dispersion (a) and 35 to 50 weight % of polyether-polyurethane-copolymerisate dispersion (b) and contains 0.05 to 0.25 weight % of silicon or polyether siloxane (c), 4 to 45 weight % of fillers (e), 0.3 to 25 weight % of colorant (f) and 0.5 to 3 weight % of other additives.

4. Use of a coating means according to one of claims 1 and 2, where it is formed as a colourless or clear coating means and consists of 40 to 50 weight % of polyurethane dispersion (a) and 40 to 50 weight % of polyether-polyurethane-copolymerisate dispersion (b) and contains 0.1 to 0.2 weight % of silicon or polyether siloxane (c), 5 to 15 weight % of wax as well as 0.5 to 2 weight % of thickener (h) and/or other additives (k).

5. Use of a coating means according to one of the preceding claims, wherein the polyurethane dispersion (a) comprises 30 to 45 weight % of polyurethane (a1) and the polyether-polyurethane dispersion (b) comprises 30 to 40 weight % of polyether-polyurethane copolymerisate (b1) as well as 0.05 to 5 weight % of N-methyl-pyrrolidone (a2, b2) and/or further additives (ax, bx) in 55 to 70 weight % of water (a3, b3) as dispersant.

6. Use of a coating means according to one of the preceding claims, wherein it contains 0.10 to 25 weight % of polyurethane (a1) and 5 to 20 weight % of polyether-polyurethane copolymerisate (b1), 0.01 to 5 weight % of N-methyl-pyrrolidone (a2, b2), 0.05 to 40 weight % of wetting agent (c), antifoaming agent (d), fillers (e), colorant (f), lubricant (g), thickener (h) and/or other additives (kx) in 30 to 70 weight % of water (a3, b3).

7. Use of a coating means according to one of the preceding claims, wherein it contains silicon as wetting agent or as bonding agent and/or as anti-foaming agent.

8. Use of a coating means according to one of the preceding claims, wherein it comprises talcum (e1), barium sulfate (e2), and/or titaniumdioxide (e3)/(f9) as fillers (e) and/or colorant (f).

9. Use of a coating means according to one of the preceding claims, wherein it comprises 'Teflon' wax (g1), polyethylene wax (g2) and/or polypropylene wax (g3) as lubricant.

## Revendications

1. Utilisation d'un agent ou moyen de revêtement destiné au laquage de surfaces et au revêtement de dispositifs d'écriture, de dessin ou de peinture ou pour des articles cosmétiques de toutes sortes, pour générer des surfaces présentant un effet spécial, dans laquelle l'agent de revêtement se compose essentiellement d'une dispersion aqueuse de polyuréthane (a) et d'une dispersion aqueuse de copolymère de polyéther - polyuréthane (b), et contient des agents mouillants (c), ainsi qu'éventuellement des agents antimousse (d), des charges ou matières de charge (e), des colorants (f), des lubrifiants (g), des épaississants (h) et/ou d'autres additifs (k), l'eau des dispersions (a), respectivement (b) étant l'agent ou le moyen dispersant primaire pour tout l'agent de revêtement ou pour l'agent de revêtement pris dans son intégralité.

2. Utilisation d'un agent de revêtement selon la revendication 1, dans laquelle il se compose essentiellement de 0,5 à 50 % en masse de dispersion aqueuse de polyuréthane (a) et de 30 à 50 % en masse de dispersion aqueuse de copolymère de polyéther - polyuréthane (b), et contient 0,05 à 40 % en masse d'agents mouillants (c), d'agents antimousse (d), de charges (e), de colorants (f), de lubrifiants (g), d'épaississants (h) et/ou d'autres additifs (k).

3. Utilisation d'un agent de revêtement selon la revendication 1 ou 2, dans laquelle il est formé ou réalisé en tant qu'agent de revêtement coloré et se compose de
1 à 12 % en masse de dispersion aqueuse de polyuréthane (a) et de
35 à 50 % en masse de dispersion aqueuse de copolymère de polyéther - polyuréthane (b), et contient
0,05 à 0,25 % en masse de silicone ou de polyéther - siloxane (c),
4 à 45 % en masse de charges (e),
0,3 à 25 % en masse de colorants (f), ainsi que
0,5 à 3 % en masse d'autres additifs.

4. Utilisation d'un agent de revêtement selon l'une des revendications 1 ou 2, dans laquelle il est formé ou réalisé en tant qu'agent de revêtement clair et se compose de
40 à 50 % en masse de dispersion de polyuréthane (a) et de
40 à 50 % en masse de dispersion de copolymère de polyéther - polyuréthane (b), et contient
0,1 à 0,2 % en masse de silicone ou de polyéther-siloxane (c),
5 à 15 % en masse de cire, et
0,5 à 2 % en masse d'épaississants et/ou d'autres additifs (k).

5. Utilisation d'un agent de revêtement selon l'une des revendications précédentes, dans laquelle la dispersion de polyuréthane (a) présente 30 à 45 % en masse de polyuréthane (a1) et la dispersion de polyéther - polyuréthane (b) 30 à 40 % en masse de copolymère de polyéther - polyuréthane (b1), ainsi que 0,05 à 5 % en masse de N-méthyl-pyrrolidone (a2, b2) et/ou d'autres additifs (ax, bx) dans 55 à 70 % en masse d'eau (a3, b3) en tant qu'agent dispersant.

6. Utilisation d'un agent de revêtement selon l'une des revendications précédentes, dans laquelle il contient
0,10 à 25 % en masse de polyuréthane (a1) et
5 à 20 % en masse de copolymère de polyéther - polyuréthane (b1),
0,01 à 5 % en masse de N-méthyl-pyrrolidone (a2, b2),
0,05 à 40 % en masse d'agents mouillants (c), d'agents antimousse (d), de charges (e), de colorants (f), de lubrifiants (g), d'épaississants (h) et/ou d'autres additifs (kx),
dans 30 à 70 % en masse d'eau (a3, b3).

7. Utilisation d'un agent de revêtement selon l'une des revendications précédentes, dans laquelle il contient de la silicone en tant qu'agent mouillant ou en tant qu'agent procurant une adhérence et/ou en tant qu'agent antimousse.

8. Utilisation d'un agent de revêtement selon l'une des revendications précédentes, dans laquelle il présente du talc (e1), du sulfate de baryum (e2) et/ou du dioxyde de titane (e3) / (f9) en tant que charges (e) et/ou colorants (f).

9. Utilisation d'un agent de revêtement selon l'une des revendications précédentes, dans laquelle il présente de la cire de téflon (g1), de la cire de polyéthylène (g2) et/ou de la cire de polypropylène (g3) en tant que lubrifiants.
